Europäisches Patentamt

European Patent Office

Office européen des brevets

(11) Numéro de publication : **0 354 104 B1**

(12) **FASCICULE DE BREVET EUROPEEN**

(19)

(45) Date de publication du fascicule du brevet :
06.05.92 Bulletin 92/19

(51) Int. Cl.⁵ : **B60R 9/058**

(21) Numéro de dépôt : **89402146.8**

(22) Date de dépôt : **28.07.89**

(54) **Système de fixation d'une barre,, en particulier d'une barre de toit pour véhicule automobile.**

(30) Priorité : **05.08.88 FR 8810608**

(43) Date de publication de la demande :
**07.02.90 Bulletin 90/06**

(45) Mention de la délivrance du brevet :
**06.05.92 Bulletin 92/19**

(84) Etats contractants désignés :
**AT BE CH DE ES GB IT LI NL SE**

(56) Documents cités :
**EP-A- 0 151 907**
**EP-A- 0 265 752**
**DE-A- 3 625 785**
**FR-A- 2 437 324**
**GB-A- 2 179 901**
**US-A- 4 084 735**
**US-A- 4 757 929**

(73) Titulaire : **APPLICATIONS TECHNIQUES Mécaniques A.T.M. S.A.**
**6 rue Louis Martin ZA des Cerisiers Thorigny s/Marne**
**F-77400 Lagny s/Marne (FR)**

(72) Inventeur : **Poulet, Serge**
**1 avenue du Dr. Laennec**
**F-77400 Lagny S/Marne (FR)**
Inventeur : **Roverso, Alain**
**30bis rue du Chariot d'Or**
**F-77400 Lagny S/Marne (FR)**

(74) Mandataire : **Cournarie, Michèle et al**
**OFFICE BLETRY R.& G. ROGER-PETIT & R.BLETRY 2, boulevard de Strasbourg**
**F-75010 Paris (FR)**

# Description

La présente invention concerne un système de fixation d'une barre, en particulier d'une barre de toit pour véhicule automobile, du type comprenant au moins deux éléments d'assemblage creux et coudés ou crosses présentant deux branches dont l'une vient en appui sur le toit, deux pattes de fixation respectivement associées aux deux crosses, chaque patte étant montée en contact glissant sur la crosse associée et présentant à une extrémité un élément de fixation pour raccordement au toit à la périphérie de celui-ci et à l'autre extrémité un rebord avec une ouverture de passage et un système de blocage pour immobiliser sur le toit l'ensemble barre-crosses-pattes de fixation. Un tel système est décrit dans EP-A-0151907.

Une barre de toit est, de manière générale, formée par une simple barre rectiligne en métal ou en un autre matériau, dénommée souvent " barre porte-tout" ou par une telle barre sur laquelle sont rapportées des attaches specifiques pour certains objets déterminés tels que des velos, la barre se dénommant "barre porte-vélo", des skis, la barre se dénommant alors " varre porte-skis",...

Indépendamment du problème de la fixation des objets sur les barres, il se pose celui de la fixation proprement dite de ces barres sur le toit du véhicule au moyen de systèmes de fixation du type précité et comprenant deux éléments d'assemblage dénommés crosses, deux pattes de fixation et deux dispositifs de blocage. La forme et l'assemblage de ces différentes pièces varient d'un système de fixation à l'autre suivant le type et la marque du véhicule automobile.

Il va être succintement décrit ci-après, parmi les systèmes de fixation commercialisés à ce jour, ceux qui sont les plus représentatifs de l'art antérieur.

Lorsque le véhicule automobile a un toit qui présente deux gouttières latérales, chaque crosse vient en appui sur le fond d'une gouttière, et la patte de fixation, associée à cette crosse, recouvre par l'une de ses extrémités formant crochet la gouttière pour prendre appui contre le toit au niveau de l'encadrement des portes du véhicule par exemple. Quant à l'autre extrémité de la patte de fixation, elle est articulée à la crosse associée. Ainsi, la patte et la cross forment une pince qui, au moyen d'une vis formant dispositif de blocage permet une immobilisation par serrage autour de la gouttière. Les deux parties d'extrémité de la barre, quant à elles, s'engagent dans les deux crosses avec immobilisation par des vis indépendantes des dispositifs de blocage coopérant directement avec les crosses et les pattes.

Lorsque le véhicule automobile a un toit sans gouttières, certains autres systèmes de fixation présentent des dispositifs de blocage coopérant directement avec la barre de toit.

Dans ce cas, chaque dispositif de blocage est généralement constitué par un vis. Cette vis est montée dans l'axe de la barre, engagée par son extrémité filetée au travers de la crosse associée et vissée dans la surface d'extrémité libre associée de la barre pourvue d'une ouverture taraudée à cet effet. Chaque patte de fixation est solidaire de la crosse associée et vient, par son extrémité libre en appui sur le toit au niveau de l'encadrement des portes du véhicule.

Lors de l'opération de fixation de la barre sur le toit, le visage des deux vis aux deux extrémités de la barre engendre deux forces parallèles dirigées l'une vers l'autre suivant l'axe de la barre provoquant un rapprochement des crosses l'une vers l'autre avec consolidation concomittente des appuis entre les pattes de fixation et le toit. Cependant, la direction de ces forces et leur point d'application tendent, d'une part, à exercer au niveau des appuis des pattes de fixation sur le toit un mouvement pivotant vers l'extérieur susceptible de provoquer le dégagement des pattes du toit et, d'autre part, à entraîner une déformation de la barre par flexion. Pour compenser cette flexion, la barre présente dans certains cas une forme légèrement cintrée pour prendre, après déformation, une forme sensiblement rectiligne.

Le document EP-A-0 151 907 décrit un système de fixation d'une barre de toit pour véhicule automobile, qui conprend deux éléments d'assemblage creux dont les extrémité adjacentes sont montées l'une dans l'autre de façon télescopique et dont les deux autres extrémités prennent appui dans le fond des deux gouttières latérales du toit, respectivement. Chaque élément d'assemblage comprend une patte de fixation montée en contact glissant avec celui-ci. Vers une extrémité, chaque patte se termine par un crochet de raccordement à la gouttière et, vers son autre extrémité, elle présente une ouverture dans laquelle s'engage un dispositif de blocage unique qui relie les deux pattes de fixation ensemble.

Le document DE-A-3 625 785 décrit un système de fixation d'une barre de toit pour véhicule automobile, qui comprend trois parties : une barre de toit et deux éléments d'assemblage. La barre de toit traverse de part en part les deux éléments d'assemblage qui prennent appui sur le toit. Il est prévu une patte de blocage pour immobiliser chaque élément d'assemblage sur le toit et une vis pour immobiliser la barre dans l'élément d'assemblage associé.

L'invention a pour but de simplifier ces derniers systèmes tout en prévoyant des dispositifs de blocage entre les deux extrémités de la barre et les crosses associées, chaque dispositif de blocage comprenant également un élément fileté fixé à la barre et une tête de retenue.

A cet effet, le système de fixation conforme à l'invention comporte les particularités définies dans la partie caractérisante de la revendication.

D'une manière générale, chaque crosse présente un coude creux qui se prolonge respectivement de part et d'autre par deux branches disposées par exemple à 120° l'une de l'autre, une partie d'extrémité de la barre s'engageant dans l'une des branches de la crosse, alors que l'autre branche vient prendre appui sur le toit, chaque patte de fixation ayant, vers une extrémité, un orifice formant passage et, vers l'autre extrémité, un rebord formant crochet, chaque dispositif de blocage comprenant au moins un élément ayant une extrémité filetée engagée librement à l'intérieur du coude de la crosse associée et fixée à la barre, et une tête vers l'autre extrémité.

Selon une autre disposition de l'invention, l'extrémité de chaque patte munie d'une ouverture est logée à l'intérieur du coude de la crosse associée et vient en appui sur une surface interne de contact du coude, ladite ouverture étant traversée par l'extrémité filetée du dispositif de blocage associé dont la tête entraîne le déplacement relatif de la patte par rapport à la crosse.

Chaque dispositif de blocage, en déplaçant la patte associée permet, dans un premier temps, de consolider l'appui entre la patte et le toit par le seul déplacement de la patte et, dans un deuxième temps, de consolider l'appui de la crosse sur le toit par les pressions de contact exercées par le dispositif de blocage directement ou par l'intermédiaire de la patte sur la crosse associée.

D'autres caractéristiques, avantages et détails ressortiront de la description explicative qui va suivre faite en référence aux dessins annexés donnés à titre d'exemple et dans lesquels:

– la figure 1 est une vue en coupe longitudinale partielle d'une partie d'extrémité d'une barre de toit en position d'immobilisation par un système de fixation suivant un premier mode de réalisation de l'invention,

– la figure 2 est une vue partielle suivant la flèche II de la figure 1 limitée à un élément d'assemblage ou crosse du système de fixation,

– la figure 3 est une vue partielle suivant la flèche II de la figure 1 limitée à une patte du système de fixation,

– la figure 4 est une vue en coupe suivant la ligne IV-IV de la figure 3,

– la figure 5 est une vue similaire à la figure 1 illustrant un système de fixation suivant un second mode de réalisation de l'invention,

– la figure 6 est une vue partielle suivant la flèche VI de la figure 5 limitée à une patte de fixation,

– la figure 7 est une vue en coupe suivant la ligne VII-VII de la figure 6,

– et les figures 8 et 9 sont des vues schématiques montrant deux types de liaison entre les pattes de fixation et le toit.

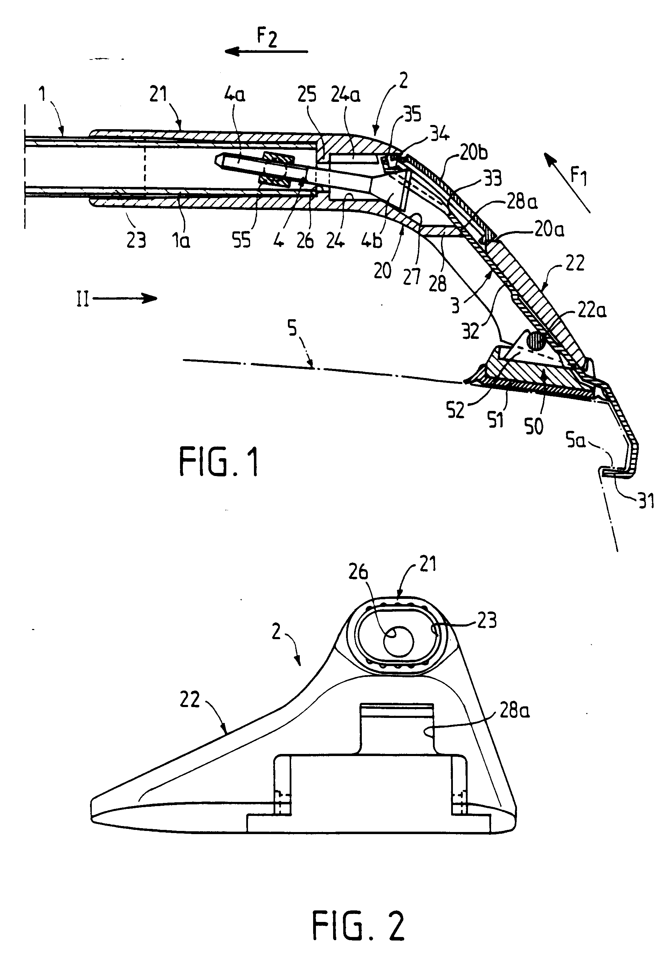

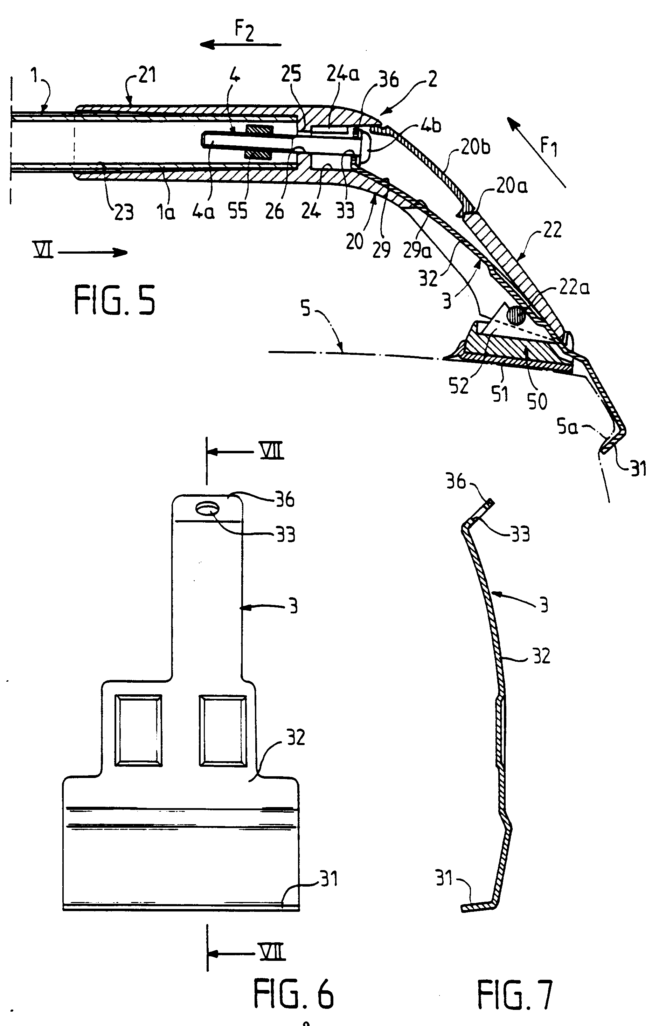

Dans les deux modes de réalisation d'un système de fixation d'une barre de toit 1, selon l'invention, chaque système de fixation comprend deux éléments d'assemblage 2 dénommés ci-après crosses, deux pattes de fixation 3 et deux dispositifs de blocage 4 pour immobiliser la barre 1 sur le toit 5 d'un véhicule automobile de tourisme. Par raison de symétrie, il n'a été représenté aux figures 1 et 5 qu'une crosse 2, qu'une patte de fixation 3 et qu'un dispositif de blocage 4. Ces différentes pièces sont montées vers une extrémité de la barre, et ces mêmes pièces sont agencées et montées de la même manière vers l'autre extrémité de la barre 1. La représentation du véhicule automobile a été volontairement limitée au toit 5 schématisé en traits mixtes.

Le premier mode de réalisation va être décrit ci-après en référence aux figures 1 à 4.

Comme visible à la figure 1, chaque crosse 2 présente trois parties, à savoir un coude creux 20 prolongé respectivement de part et d'autre par deux branches 21 et 22, sensiblement à 120° l'une de l'autre, et coopérant respectivement avec la barre 1 et le toit 5 du véhicule.

La branche 21 de chaque crosse 2, sensiblement rectiligne, est creuse et présente un évidement 23 débouchant à l'extrémité libre de la branche 21. Le fond de l'évidement 23 est délimité par une paroi transversale 25 formant butée. Cette paroi 25 est percée par une ouverture de passage 26 qui débouche dans un évidement 24 du coude 20 sensiblement dans le prolongement de l'évidement 23. La surface périphérique interne de l'évidement 23 présente, en section transversale, un profil complémentaire à celui de la surface périphérique externe de la barre 1 pour que la partie d'extrémité libre 1a de celle-ci puisse s'engager dans cet évidement 23. Comme visible à la figure 2, l'évidement 23 présente un profil de forme ovale du fait que la barre 1 présente deux méplats opposés réunis l'un à l'autre par des surfaces courbes.

Pour faciliter la description de la structure de la crosse 2 et en considérant la figure 1 montrant celle-ci en position montée sur le toit 1, on désignera par côté intérieur, le côté de la crosse adjacent au toit et, par côté extérieur, le côté de la crosse opposé au toit.

L'évidement 24 du coude 20 se prolonge, côté intérieur, par une surface évasée de forme conique délimitant une portée 27. Cette portée 27 se prolonge ensuite par une surface plane 28 s'étendant sensiblement parallèlement à l'axe longitudinal de l'évidement 24 du coude 20. Cette surface 28 présente une ouverture 28a pour le passage à l'intérieur du coude 20 d'une extrémité de la patte de fixation 3 associée, comme décrit plus loin.

Chaque coude 20, côté extérieur, présente une ouverture 20a donnant accès à l'évidement 24 du coude pour le passage d'un dispositif de blocage 4, comme décrit plus loin. Cette ouverture 20a est obturée par une plaque amovible 20b, avantageusement flexible pour la fixer par déformation élastique sans recourir à des moyens de fixation additionnels. Le coude 20 se prolonge, côté extérieur, par la branche 22 qui présente, vers son extrémité libre et côté intérieur, un axe 22a s'étendant sensiblement perpendiculairement à la barre 1.

Chaque crosse 2 vient en appui sur le toit 5, dans l'exemple considéré ici, par l'intermédiaire d'un patin 50 fixé à une semelle d'appui 51 en caoutchouc pour éviter tout glissement de la crosse 2 sur le toit 5. Le patin 50, sur son côté opposé à la semelle 51, supporte une chape 52 dans laquelle s'engage l'axe 22a de la crosse 2 associée, de manière à permettre un mouvement pivotant de la crosse 2.

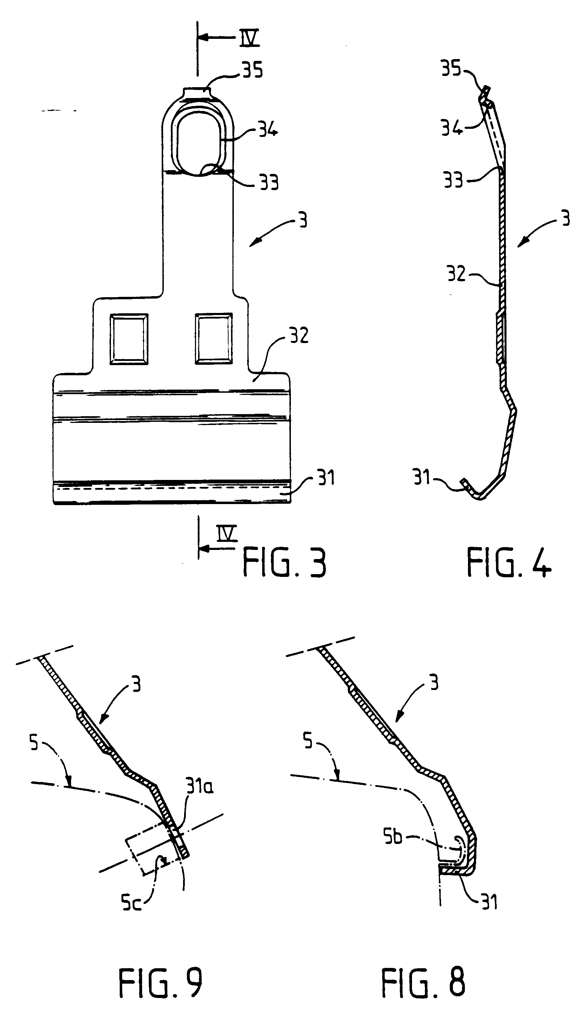

La forme de la patte de fixation 3, selon le premier mode de réalisation, est représentée aux figures 3 et 4.

La patte de fixation 3, vers une extrémité, est conformée en crochet 31 et présente, vers son autre extrémité une ouverture 33 bordée, en partie, par une jupe conique 34 vers la partie de l'ouverture 33 située vers l'extrémité libre adjacente de la patte 3. A cette extrémité, la patte est sensiblement repliée à 90° par rapport à la jupe 34 pour former un rebord 35. Il est à noter, que la largeur de la patte 3 est plus grande vers son extrémité 31 conformée en crochet pour augmenter la surface d'appui sur le toit 5 (figure 3).

En se reportant à nouveau à la figure 1, la patte de fixation 3 est montée du côté intérieur du coude 20 de la crosse 2 associée. Son extrémité avec l'orifice 33, introduite par l'ouverture 28a du côté intérieur du coude 20, fait saillie à l'entrée de l'évidement 24, de manière à ce que l'orifice 33 soit sensiblement dans l'axe de la barre de toit 1. Vers une extrémité, la patte 3 prend appui sur la périphérie de l'ouverture 28a du coude 20. Dans sa partie centrale, elle prend appui sur la branche 22 du coté intérieur du coude 20. Vers son autre extrémité, la patte 3 passe entre la branche 22 du coude 20 et le patin 50 associé, en prenant appui sur ce dernier. Enfin, à son extrémité, le crochet 31 de la patte 3 vient au voisinage de la partie d'encadrement 5a délimitant dans le toit 5 les ouvertures des portes.

Les deux parties d'extrémité 1a de la barre 1 sont reçues librement dans les évidements 23 des branches 21 des crosses 2, respectivement. La barre 1 est creuse et présente deux éléments 55 ayant un orifice taraudé, qui sont logés et fixés à l'intérieur de la barre 1 vers les deux extrémités de celle-ci, respectivement.

Les deux dispositifs de blocage sont, dans l'exemple considéré ici, constitués chacun par une vis 4 ayant une partie filetée 4a et une tête conique 4b. Chaque vis 4 est introduite dans le coude 20 de la crosse 2 associée par l'ouverture 20a, la plaque amovible 20b ayant été préalablement enlevée. La vis 4, par sa partie filetée 4a, pénètre dans l'évidement 24 de la branche 21 de la crosse 2, traverse l'ouverture 33 de la patte 3 associée, le passage 26 et pénètre enfin dans l'évidement 23 de la branche 21 pour être vissée dans l'orifice taraudé de l'élément 55 logé à l'intérieur de la barre 1.

Au cours de l'opération de vissage des vis 4, la tête 4b de chaque vis prend appui, d'une part, sur la portée 27 du coude 20 de la crosse 2 associée et, d'autre part, sur la jupe 34 de la patte 3 associée. En prenant appui sur la jupe 34, l'avancée de chaque vis 4 entraîne dans un premier temps le déplacement de la patte 3 par rapport à la crosse 2. Chaque patte 3 est alors tirée vers le haut, sensiblement parallèlement à son plan, tant que son crochet 31 n'est pas en appui sur la partie d'encadrement 5a du toit 5. Dès cet instant, la patte 3 offre une résistance à son propre déplacement, ce qui a pour effet de créer une première force F1 qui augmente la pression de contact entre le crochet 31 et la partie d'encadrement 5a du toit 5. Avantageusement, la force F1 agit sensiblement perpendiculairement à la surface de contact entre le crochet 31 et la partie d'encadrement 5a du toit.

Etant donné que la tête 4b vient également directement en appui sur la portée 27 du coude 20, le déplacement de la vis 4 entraîne, dans un deuxième temps, la création d'une force F2 parallèle à l'axe de la barre 1 et en direction de l'autre crosse 2. Les deux crosses 2 étant maintenues en position sur le toit 5 par leurs patins 50 qui évitent tout glissement, la force F2 entraîne, d'une part, un renforcement de la pression de contact entre les patins 50 et le toit 5, et d'autre part, un léger pivotement des crosses 2 autour des axes 22a entraînant une pénétration plus en avant des parties d'extrémité 1a de la barre 1 dans les évidements 23 respectifs des crosses 2.

Selon le second mode de réalisation du système de fixation illustré aux figures 5 à 7, les mêmes chiffres de référence ont été conservés pour les éléments communs aux deux modes de réalisation.

Chaque patte 3 est légèrement courbée dans sa partie centrale 32 et elle se termine, vers une extrémité, par un crochet 31 s'étendant radialement vers l'intérieur par rapport au rayon de courbure de la patte 3 et, vers l'autre extrémité par un rebord 36 s'étendant radialement vers l'extérieur par rapport au rayon de courbure de la patte 3. Le rebord 36 est percé d'une ouverture de passage 33.

L'évidement 24 du coude 20 de chaque crosse 2 se prolonge, côté intérieur, par une surface d'appui inclinée 29 légèrement bombée et s'étendant sensiblement parallèlement à la branche 22 de la crosse 2. Autrement dit, l'axe de l'évidement 24 et cette surface d'appui 29 font sensiblement un angle de 120° entre eux. La surface 29 est bombée suivant le même rayon de courbure que la patte 3.

Comme précédemment, la patte 3 est introduite dans la crosse 2 associée de manière à ce que son rebord 36 fasse saillie à l'intérieur du coude 20. Le dispositif de blocage 4, tel une vis classique, est introduite par l'ouverture 20b côté extérieur du coude 20, traverse par sa partie filetée 4a l'orifice 33 de la patte 3, l'évidement 24 et le passage 26 pour se visser dans l'orifice taraudé adjacent de l'élément 55 logé à l'intérieur de la barre 1.

Au cours de l'opération de vissage des vis 4, la tête 4b de chaque vis prend appui sur le rebord 36 de la patte 3. L'avancée de chaque vis 4 entraîne le déplacement de la patte 3 associée par rapport à la crosse 2 associée. Chaque patte 3 est alors tirée vers le haut, comme précédemment, tant que son crochet 31 n'est pas en appui sur la partie d'encadrement 5a du toit 5. Il est à noter dans ce cas que chaque patte 3 décrit un arc de cercle en prenant appui sur la surface courbe 29 du coude 20, le centre de l'arc de cercle étant situé côté intérieur du véhicule. Ensuite, l'avancée de chaque vis 4, du fait de la résistance offerte par chaque patte 3, crée, d'une part, une force F1 qui augmente la pression de contact entre le crochet 31 et la partie d'encadrement 5a du toit 5 et, d'autre part, une force F2 qui augmente la pression de contact entre la patte 3 et la surface 29 du coude 20, force qui produit les mêmes effets que dans le premier mode de réalisation.

Dans le cas de la figure 8, il est montré l'application du système conforme à l'invention dans le cas d'un toit ayant des gouttières 5b. Le crochet 31 de chaque patte 3 peut venir en appui autour de la gouttière 5b associée sans changer le principe de l'invention.

En variante, telle que représentée à la figure 9, la patte de fixation 3 se distingue de celle représentée à la figure 3, uniquement par le fait que la partie 31 n'est pas conformée en crochet, mais présente simplement une ouverture 31a permettant la fixation de la patte dans un trou borgne 5c du toit 5 au moyen d'une vis par exemple, dans le cas où celui-ci ne présente pas de gouttières. Ce dernier exemple montre simplement que le système de fixation conforme à l'invention peut s'appliquer à toute forme de toit en étant indépendant du mode d'accrochage des pattes sur le toit.

Bien entendu, l'invention n'est pas limitée aux modes de réalisation décrits donnés à titre d'exemple. En particulier, le système de fixation peut être également utilisé pour fixer des galeries sur le toit d'un véhicule automobile.

## Revendications

1. Système de fixation d'une barre (1), en particulier d'une barre de toit pour véhicule automobile, du type comprenant au moins deux éléments d'assemblage creux et coudés ou crosses (2) présentant deux branches (21,22) dont l'une (22) vient en appui sur le toit, deux pattes (3) de fixation respectivement associées aux deux crosses (2), chaque patte (3) étant montée en contact glissant sur la crosse associée et présentant à une extrémité un élément de fixation (31) pour raccordement au toit à la périphérie de celui-ci et à l'autre extrémité un rebord (36) avec une ouverture de passage (33), un système de blocage pour immobiliser sur le toit l'ensemble barre-crosses-pattes de fixation, caractérisé en ce que l'autre branche (21) d'élément d'assemblage reçoit l'une des extrémités (la) de la barre de toit (1), les deux surfaces d'extrémité de la barre venant respectivement en appui contre deux butées annulaires internes (25) prévues à l'intérieur des crosses, et en ce que le système de blocage comprend deux dispositifs (4), chaque dispositif comprenant, à une extrémité, une partie filetée (4a) qui traverse l'ouverture (33) de la patte associée (3) et la butée annulaire (25) de la crosse (2) associée pour venir se visser dans la surface d'extrémité adjacente de la barre (1) et, à l'autre extrémité, une tête de vissage (4b) qui prend appui sur la patte (3) associée.

2. Système de fixation selon la revendication 1, caractérisé en ce que chaque patte (3) est de forme légèrement courbe et est déplacée suivant un arc de cercle en glissant sur une surface de contact courbe (29) de la crosse (2), le centre de l'arc de cercle étant situé vers l'intérieur du véhicule.

3. Système de fixation selon la revendication 1 ou 2, caractérisé en ce que la tête de vissage (4b) est conique et prend en partie appui, d'une part, sur la patte (3) associée au niveau d'un rebord de forme complémentaire formant jupe (34) bordant l'ouverture (33) de la patte (3) et, d'autre part, sur une surface de contact inclinée (27) de la crosse (2).

4. Système selon l'une quelconque des revendications précédentes, caractérisé en ce que chaque crosse (2) prend appui sur le toit (5) par un patin (50) solidaire d'une semelle d'appui (51).

## Patentansprüche

1. Befestigungsvorrichtung für einen Holm (1), insbesondere für einen Dachträgerholm eines Kraftfahrzeugs des Typs umfassend wenigstens zwei hohle und gebogene Verbindungsglieder oder gekrümmte Teile (2), die zwei Arme (21, 22) aufweisen, wobei der eine (22) auf das Dach drückt, zwei Befestigungsklammern (3), die jeweils mit den beiden gekrümmten Teilen (2) verbunden sind, wobei jede Befestigungsklammer (3) in Gleitkontakt an dem verbundenen gekrümmten Teil angebracht ist und an einem Ende ein Befestigungselement (31) zur Verbindung mit dem Dach an dessen Rand und am anderen Ende eine Leiste (36) mit einer Durchtrittsöffnung (33) aufweist, ein Blockiersystem, um die Einheit Holm-gekrümmte Teile-Befestigungsklammern festzusetzen, dadurch gekennzeichnet, daß der andere Arm (21) des Verbindungsglieds eines der Enden (1a) des Dachholmes (1) aufnimmt, wobei die beiden Endflächen des Holms jeweils gegen zwei ringförmige, innere Anschläge (25), die im Inneren der gekrümmten Teile vorgesehen sind, drücken und, daß das Blockiersystem zwei Vorrichtungen (4) umfaßt, wobei jede Vorrichtung an einem Ende ein mit Gewinde versehenes Teil (4a), das die Öffnung (33) der verbundenen Befestigungsklammer (3) und den ringförmigen Anschlag (25) des verbundenen gekrümmten Teils (2) durchquert, um sich in der dem Holm (1) benachbarten Endfläche zu verschrauben und am anderen Ende einen Schraubkopf (4b) umfaßt, der auf die verbundene Befestigungsklammer (3) drückt.

2. Befestigungsvorrichtung nach Anspruch 1, dadurch gekennzeichnet, daß jede Befestigungsklammer (3) eine leicht gebogene Form aufweist und auf einem Kreisbogen bewegt wird, indem es auf einer gebogenen Kontaktfläche (29) des gekrümmten Teils (2) gleitet, wobei das Zentrum des Kreisbogens im Inneren des Fahrzeugs liegt.

3. Befestigungsvorrichtung nach Anspruch 1 oder 2, dadurch gekennzeichnet, daß der Schraubkopf (4b) konisch ist und teilweise einerseits auf die Befestigungsklammer (3), verbunden auf Höhe einer Leiste mit komplementärer Form, die eine Schürze (34) bildet, die die Öffnung (33) der Befestigungsklammer (3) begrenzt und andererseits auf eine geneigte Kontaktfläche (27) des gekrümmten Teils (2) drückt.

4. Vorrichtung nach einem der vorhergehenden Ansprüche, dadurch gekennzeichnet, daß jedes gekrümmte Teil (2) auf das Dach (5) durch eine mit einer Stützsohle (51) verbundene Fußplatte (50) drückt.

## Claims

1. System for fixing a bar (1), in particular a motor vehicle roof rack bar, of the type comprising at least two hollow, angled assembly members or crooks (2) having two legs (21, 22), one of which (22) bears on the roof, two fixing lugs (3) respectively associated with the two crooks (2), each lug (3) being mounted in sliding contact on the associated crook and having at one end a fixing member (31) for connection to the roof at the periphery of the latter and at the other end a shoulder (36) with a passage opening (33), a locking system for immobilising the bar-crook-lug fixing assembly on the roof, characterised in that the other assembly member leg (21) houses one end (1a) of the roof rack bar (1), the two end surfaces of the bar coming to bear respectively against two internal annular stops (25) provided inside the crooks, and in that the locking system comprises two devices (4), each device comprising, at one end, a threaded part (4a) which passes through the opening (33) in the associated lug (3) and the annular stop (25) on the associated crook (2) so as to screw into the adjacent end surface of the bar (1) and, at the other end, a screwing head (4b) which bears on the associated lug (3).

2. Fixing system according to claim 1, characterised in that each lug (3) is slightly curved in shape and is moved along an arc of a circle by sliding over a curved contact surface (29) on the crook (2), the centre of the arc of the circle being located towards the inside of the vehicle.

3. Fixing system according to claim 1 or 2, characterised in that the screwing head (4b) is conical and partly bears, on the one hand, on the associated lug (3) at a shoulder with a complementary shape forming a skirt (34) bordering on the opening (33) in the lug (3) and, on the other hand, on a slanting contact surface (27) on the crook (2).

4. System according to any of the preceding claims, characterised in that each crook (2) bears on the roof (5) through a base (50) secured to a bearing plate (51).

FIG. 1

FIG. 2

EP 0 354 104 B1

FIG. 3

FIG. 4

FIG. 9

FIG. 8

8

FIG. 5

FIG. 6

FIG. 7